# FASCICULE DE BREVET EUROPEEN

(11) **EP 2 649 616 B1**
(45) Date de publication et mention de la délivrance du brevet: **13.02.2019**
(21) Numéro de dépôt: 11808605.7
(22) Date de dépôt: 07.12.2011
(51) Int. Cl.: G06K 7/08, G11B 5/105, G11B 5/48, G11B 5/008

(54) **DISPOSITIF DE MAINTIEN D'UNE TÊTE DE LECTURE MAGNÉTIQUE**
VORRICHTUNG ZUR UNTERSTÜTZUNG EINES MAGNETLESEKOPFS
DEVICE FOR SUPPORTING A MAGNETIC READING HEAD

(30) Priorité: 07.12.2010 FR 1060208; 07.12.2010 FR 1060204
(43) Date de publication de la demande: 16.10.2013
(73) Titulaire: Ingenico Group, 75015 Paris (FR)
(72) Inventeur: BARNERON, Sylvain, F-26000 Valence (FR)
(74) Mandataire: Vidon Brevets & Stratégie
(86) Numéro de dépôt international: PCT/EP2011/072006
(87) Numéro de publication internationale: WO 2012/076572

(56) Documents cités:
- JP-A- 1 102 715
- US-A1- 2003 089 773
- AUSIAS ET AL: "Micro-mechanical model of TPE made of polypropylene and rubber waste", POLYMER, ELSEVIER SCIENCE PUBLISHERS B.V, GB, vol. 48, no. 11, 11 mai 2007 (2007-05-11), pages 3367-3376, XP022071323, ISSN: 0032-3861, DOI: DOI:10.1016/J.POLYMER.2007.03.049

## Description

### 1. DOMAINE DE L'INVENTION

Le domaine de l'invention est celui des dispositifs mettant en oeuvre une tête de lecture magnétique. Plus précisément, l'invention concerne le guidage et le maintien d'une telle tête de lecture magnétique.

L'invention a de nombreuses applications, par exemple, lorsque celle-ci est utilisée dans des terminaux de paiement. Plus généralement, elle peut s'appliquer dans tous les cas où une tête de lecture magnétique est utilisée.

### 2. ARRIÈRE-PLAN TECHNOLOGIQUE

Les cartes magnétiques compatibles avec la norme ISO 7811 comprennent une bande magnétique comprenant trois pistes d'enregistrement (généralement appelées piste ISO 1, ISO 2 et ISO 3). Ces pistes peuvent contenir des informations en relation avec son possesseur. Notamment, des informations relatives à un compte bancaire, et des données cryptées sont stockées sur de telles pistes.

L'utilisation de telles cartes magnétiques est très répandue dans le domaine bancaire, afin de réaliser des transactions chez des commerçants. Lors d'une telle transaction, la carte magnétique d'un client est insérée à l'extrémité d'une fente (dans laquelle l'extrémité d'une tête de lecture magnétique est présente, sur une des faces des parois formant la fente) dans un terminal de paiement, et un mouvement de translation de la carte est effectué (on fait coulisser la carte magnétique dans cette fente de sorte que la bande magnétique de la carte soit présentée en regard de l'extrémité de la tête de lecture magnétique). Ainsi, l'extrémité de la tête de lecture magnétique rentre en contact physique avec la piste magnétique de la carte magnétique, et elle mesure la polarisation de particules magnétiques sur des portions de la piste magnétique considérée (de par le mouvement de translation) et en déduit des informations binaires.

Lors du mouvement de translation de la carte magnétique dans la fente du terminal de paiement, une pression est exercée sur la tête de lecture magnétique par le coulissement de la carte magnétique. Ainsi, une tête de lecture doit être capable de se mouvoir perpendiculairement à l'axe de translation d'une carte dans la fente. De plus, le passage d'une carte dans la fente peut induire un léger gîte de la tête de lecture magnétique par rapport à l'axe perpendiculaire à l'axe de translation de la carte.

Afin de stabiliser la tête de lecture magnétique lors de la lecture d'une carte, il s'avère nécessaire d'utiliser un dispositif de maintien d'une telle tête (afin de limiter le gîte susmentionné, cette fonctionnalité étant nommée « guidage de la tête de lecture magnétique »), qui permet aussi, une fois la carte passée, de repositionner la tête de lecture magnétique à sa position d'origine (cette fonctionnalité étant nommée « retour ou un amortissement de la tête de lecture magnétique »).

On connaît, dans l'état de la technique, différents types de solutions pour contrôler le guidage et le retour de la tête magnétique. Les documents de brevets suivants: JP1102715A, CN2446589YY, FR2875634, GB2297417A, JP6349035A, JP63302410A, US4628386A1, US5270523A1, US5552947A1, US6487046B1 présentent ainsi différentes techniques pour réaliser des dispositifs de maintien d'une tête de lecture magnétique.

Cependant, ces différentes techniques possèdent plusieurs inconvénients.

Notamment, ces solutions nécessitent d'utiliser de nombreuses pièces métalliques (à savoir des fils ressorts, ou des lames verticales faisant offices de ressort) qui nécessitent, lors de la fabrication des dispositifs de maintien de tête de lecture magnétique, d'utiliser des procédés d'assemblage complexes à mettre en oeuvre.

### 3. OBJECTIFS DE L'INVENTION

L'invention, dans au moins un mode de réalisation, a notamment pour objectif de pallier ces différents inconvénients de l'état de la technique.

Plus précisément, dans au moins un mode de réalisation de l'invention, un objectif est de fournir un dispositif de maintien d'une tête de lecture magnétique qui n'est pas encombrant.

Au moins un mode de réalisation de l'invention a également pour objectif de fournir un tel dispositif de maintien d'une tête de lecture magnétique dont le procédé de fabrication est simple à mettre en oeuvre et est réalisable pour un faible coût de production.

Un autre objectif d'au moins un mode de réalisation de l'invention est de fournir un tel dispositif de maintien d'une tête de lecture magnétique dont l'agencement avec une telle tête soit facilement réalisable, sans réaliser des opérations d'usinage sur une tête de lecture magnétique.

Un objectif complémentaire d'au moins un mode de réalisation de l'invention est de fournir un dispositif de maintien qui ne comprend pas de pièces mécaniques constituant un ressort de rappel.

Enfin, un autre objectif d'au moins un mode de réalisation de l'invention est de fournir un dispositif de maintien qui permet de protéger (d'un point de vue sécuritaire) la tête de lecture magnétique.

### 4. EXPOSÉ DE L'INVENTION

L'invention est définie par la revendication indépendante.

Dans un mode de réalisation particulier de l'invention, il est proposé un dispositif de maintien d'une tête de lecture magnétique. Ce dispositif est remarquable en ce qu'il comprend un moyen de guidage et amortissement de ladite tête de lecture, monté entre une base de la tête de lecture et un plan d'appui parallèle à ladite base, comprenant au moins une pièce réalisée en un matériau possédant un module d'élasticité supérieur à 200 N/mm².

Le principe général de l'invention consiste donc à intégrer dans un moyen de guidage et d'amortissement au moins une pièce réalisée en un matériau élastomère permettant d'assurer une fonction ressort (qui amortit les mouvements de translation de la tête de lecture selon un axe perpendiculaire au plan d'appui, et qui permet aussi de légères rotations de la tête de lecture selon ce même axe) plus ou moins importante en fonction du choix de la forme d'une telle pièce.

Ainsi, ce mode de réalisation particulier de l'invention repose sur une approche tout à fait nouvelle et inventive vis-à-vis de l'état de la technique susmentionnée, car il ne nécessite pas l'usage de nombreuses pièces métalliques nécessitant l'usage, par exemple, de goujons ou de soudures pour fixer celles-ci entre elles. Les coûts de fabrication ainsi que l'encombrement du moyen de guidage et d'amortissement sont donc réduits.

De façon avantageuse, dans un tel dispositif, le matériau appartient au groupe comprenant : des silicones ; des thermoplastiques élastomères.

Cette liste est évidemment non-exhaustive.

De façon avantageuse, un tel dispositif est remarquable en ce que ledit moyen de guidage et amortissement est une structure entièrement réalisée en un matériau possédant un module d'élasticité supérieur à 200 N/mm².

Ainsi, comme le moyen de guidage et d'amortissement constitue une seule et même pièce, il peut être fabriqué par un procédé de moulage, ce qui est particulièrement avantageux d'un point de vue du coût de fabrication.

Ce dispositif peut être obtenu de diverses manières, par exemple par moulage ou encore par extrusion puis découpage.

Ainsi le moyen de guidage et d'amortissement étant entièrement réalisé en un matériau possédant un module d'élasticité supérieur à 200 N/mm², on peut facilement choisir la forme de celui-ci afin de faciliter son intégration dans un dispositif quelconque.

De façon avantageuse, un tel dispositif est remarquable en ce que le moyen de guidage et amortissement comprend au moins une pièce de soutien reposant sur le plan d'appui, réalisée en un matériau élastomère et possédant une forme de cylindre dont les bases sont positionnées perpendiculairement au plan d'appui.

Ainsi, grâce à l'utilisation d'une telle pièce de soutien en forme de cylindre, le moyen de guidage et d'amortissement possède un effet élastique (encore appelé un effet ressort) accru (de par la forme et le type de matériau choisis) lorsqu'une force est exercée sur celui-ci.

De façon avantageuse, un tel dispositif est remarquable en ce que ladite au moins une pièce de soutien en forme de cylindre est creuse.

Ainsi, en choisissant une telle pièce de soutien en forme de cylindre qui est creuse, on obtient une pièce de soutien qui possède une capacité de déformation optimale. La flexibilité d'une telle pièce de soutien est donc accrue. Par conséquent, on améliore par la même les fonctions de guidage et de retour de la tête de lecture magnétique.

De plus, dans ce mode de réalisation, on utilise moins de matériaux pour réaliser une telle pièce de soutien, et donc, on réduit les coûts de production (tout en accentuant l'effet technique).

De façon avantageuse, un tel dispositif est remarquable en ce que le dispositif comprend deux dites pièces de soutien en forme de cylindre qui sont similaires et montées parallèles entre elles.

Ainsi, en utilisant deux telles pièces de soutien montées en parallèle entre elles, on peut diminuer les dimensions de ces pièces.

De plus, on augmente l'effet ressort du moyen de guidage et d'amortissement via la combinaison de plusieurs pièces de soutien. Le fait de les positionner parallèlement l'une vis à vis de l'autre, permet d'accentuer la réactivité du moyen de guidage et d'amortissement lorsqu'une pression est exercée sur la tête de lecture magnétique.

De plus, en choisissant des pièces de soutien similaires (en formes, dimensions et matériaux), on équilibre au mieux l'assise de la base de la tête de lecture.

De façon avantageuse, un tel dispositif est remarquable en ce que ledit moyen de guidage et amortissement comprend une pièce de réception de la base de la tête de lecture, reposant sur ladite au moins une pièce de soutien.

Ainsi, en utilisant une telle pièce de réception, la tête de lecture est encore plus stable que dans les précédents modes de réalisations de l'invention.

De façon avantageuse, un tel dispositif est remarquable en ce que ladite pièce de réception possède un logement dans lequel s'encastre la tête de lecture.

Ainsi, en utilisant une pièce de réception qui possède un tel logement (ou cavité), on garantie une stabilité optimale de la tête de lecture magnétique. Du fait qu'une telle pièce de réception est ajustée avec, par exemple, la base de la tête de lecture, il n'est pas nécessaire que cette pièce de réception ait une surface plane. Ainsi, on peut élargir le choix de la forme de cette pièce de réception en fonction des contraintes de productions (forme d'un moule, etc.). De plus, d'un point de vue sécuritaire, un attaquant est obligé de réaliser une attaque plus invasive pour accéder à la tête de lecture magnétique.

De façon avantageuse, un tel dispositif est remarquable en ce que ladite pièce de réception possède une ouverture traversante permettant le passage d'un élément de connexion relié à la tête de lecture.

Ainsi, ce mode de réalisation de l'invention permet d'utiliser n'importe quelle tête de lecture magnétique sur le marché (sans effectuer d'opérations d'usinage) grâce à l'utilisation de l'ouverture traversante permettant, par exemple, de faire passer un câble en nappe pour alimenter et commander la tête de lecture.

Dans un autre mode de réalisation de l'invention, il est proposé un lecteur de cartes magnétiques comportant un dispositif de maintien d'une tête de lecture magnétique tel que mentionné précédemment.

Dans un autre mode de réalisation de l'invention, il est proposé un tel lecteur qui comprend un boîtier comprenant, sur une première face, un écran et/ou un clavier, et sur une seconde face, un logement apte à recevoir un terminal de communication. De plus, ledit boîtier présente une fente longitudinale d'insertion d'une carte magnétique, au voisinage de laquelle est placée ladite tête de lecture.

### 5. LISTE DES FIGURES

D'autres caractéristiques et avantages de l'invention apparaîtront à la lecture de la description suivante, donnée à titre d'exemple indicatif et non limitatif, et des dessins annexés, dans lesquels :
- la figure 1 présente un moyen de guidage et d'amortissement d'une tête de lecture magnétique, compris dans un dispositif de maintien, selon un premier mode de réalisation de l'invention ;
- la figure 2 présente un moyen de guidage et d'amortissement apparaissant sur la figure 1, ajusté avec une tête de lecture alimentée par un câble en nappe ;
- la figure 3 présente un moyen de guidage et d'amortissement d'une tête de lecture magnétique selon un deuxième mode de réalisation de l'invention, dans lequel le moyen de guidage et d'amortissement est constitué de deux éléments ;
- la figure 4 présente un moyen de guidage et d'amortissement d'une tête de lecture magnétique selon un troisième mode de réalisation de l'invention sur lequel est fixé une tête de lecture magnétique ;
- la figure 5 présente un moyen de guidage et d'amortissement d'une tête de lecture magnétique selon un quatrième mode de réalisation de l'invention comprenant une pièce de soutien en forme de parallélépipède rectangle creux ;
- les figures 6A à 6D présentent un exemple de terminal de paiement comprenant un lecteur de cartes magnétiques comportant un dispositif de maintien d'une tête de lecture magnétique selon un mode de réalisation quelconque de l'invention ;
- la figure 7 présente la structure interne d'un dispositif de paiement présenté dans les figures 6A à 6D.

### 6. DESCRIPTION DÉTAILLÉE

Sur toutes les figures du présent document, les éléments et étapes identiques sont désignés par une même référence numérique.

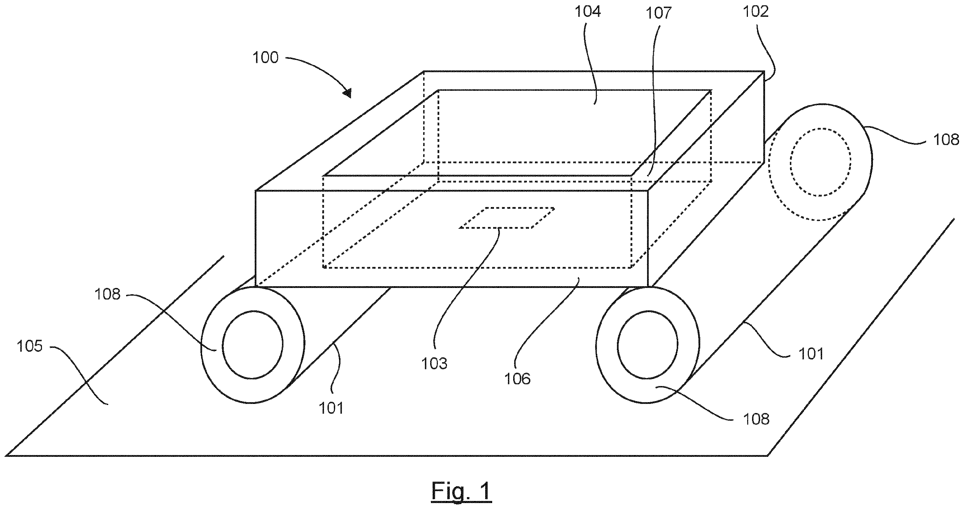

La **figure 1** présente un moyen de guidage et d'amortissement 100 d'une tête de lecture magnétique, compris dans un dispositif de maintien (non représenté), selon un premier mode de réalisation de l'invention.

Dans ce mode de réalisation, le moyen de guidage et d'amortissement est constitué d'une seule et même pièce en élastomère, obtenu par un procédé de fabrication en utilisant par exemple un moule (en injectant le matériau dans le moule).

Selon le premier mode de réalisation de l'invention, le moyen de guidage et d'amortissement comprend deux pièces de soutien 101 creuses, en forme de cylindre de révolution, dont les bases 105 sont montées perpendiculairement à un plan d'appui 105, et les pièces de soutien sont positionnées parallèlement entre elles. Le fait de choisir de telles pièces de soutien creuses permet d'augmenter l'élasticité du moyen de guidage et d'amortissement. Dans un autre mode de réalisation, on peut choisir des pièces de soutien ayant une même forme mais qui sont pleines. Pour que les pièces de soutien de ces deux modes de réalisations soient équivalentes, il peut être envisagé de jouer sur le choix du matériau constitutif de ces pièces de soutien.

Selon le premier mode de réalisation de l'invention, le moyen de guidage et d'amortissement de la tête de lecture comprend une pièce de réception 102 en forme de parallélépipède rectangulaire ou de cube dont une des faces 106 fait en partie corps avec des portions des flans des pièces de soutien en forme de cylindre de révolution. Ainsi, la pièce de réception 102 se trouve quasiment parallèle au plan d'appui 105.

Cette pièce de réception 102 en forme de parallélépipède rectangulaire ou de cube comprend une première fente 103 sur la face susmentionnée 106. Il comprend aussi une ouverture 104 sur la face 107 opposée à la face 106 faisant en partie corps avec des portions des flans des pièces de soutien en forme de cylindre de révolution. Cette ouverture 104 débouche sur une cavité 107 ayant des dimensions choisies de telles sortes qu'elle puisse accueillir une tête de lecture (permettant ainsi d'ajuster la base de la tête de lecture) et que la base de la tête de lecture soit en contact avec la surface 106 (dans d'autres modes de réalisation de l'invention, le fond de la cavité 107 n'est pas confondu avec la surface 106, auquel cas, une fente dans le fond de la cavité 107 est présente ainsi qu'un tunnel reliant cette fente à la fente 103). Ainsi, la tête de lecture est solidaire du moyen de guidage et d'amortissement de la tête de lecture magnétique. À travers la fente 103, un câble en nappe peut être inséré dans celle-ci afin de permettre l'alimentation (ainsi que le transit des données lues par la tête de lecture) de la tête de lecture magnétique auquel il est relié par une première extrémité (la deuxième extrémité de ce câble étant reliée à un dispositif capable de traiter des informations, et de générer un courant pour alimenter la tête de lecture magnétique).

Dans un autre mode de réalisation, la pièce de réception 102 peut avoir une forme de cylindre de révolution, de prisme, ou encore tout autre type de forme et dans lequel une cavité (ou logement) permettant d'insérer et/ou d'ajuster la base de la tête de lecture peut être réalisé.

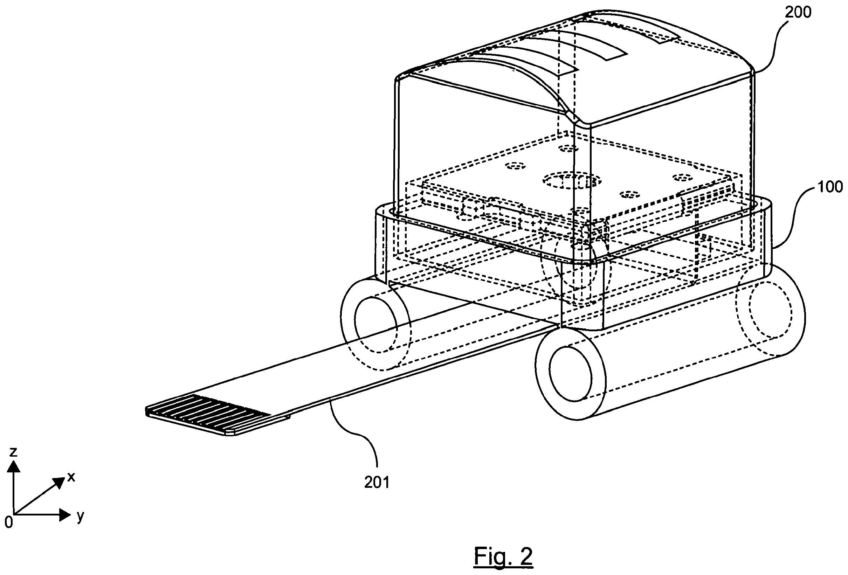

La **figure 2** présente un moyen de guidage et d'amortissement 100 apparaissant sur la figure 1, ajusté avec une tête de lecture magnétique 200 alimentée par un câble en nappe 201.

Lorsque ce moyen de guidage et d'amortissement est intégré dans un équipement du type terminal de paiement, un chemin guidant la carte magnétique (encore appelé un guide « swipe » (non représenté sur les figures)) vient exercer une légère pression sur la tête de lecture (et donc sur le moyen de guidage et d'amortissement) afin de fixer la surface d'appui et le moyen de guidage et d'amortissement.

Dans un autre mode de réalisation, on peut envisager de fabriquer les pièces de soutien 101 via l'utilisation d'un premier moule et la pièce de réception 102 via l'utilisation d'un deuxième moule, puis de coller les pièces de soutien 101 avec la pièce de réception 102 afin d'obtenir un moyen de guidage et d'amortissement ayant la même forme (et donc des caractéristiques techniques similaires lors d'un mouvement de la tête de lecture magnétique) que le moyen de guidage et d'amortissement décrit en relation avec la figure 1.

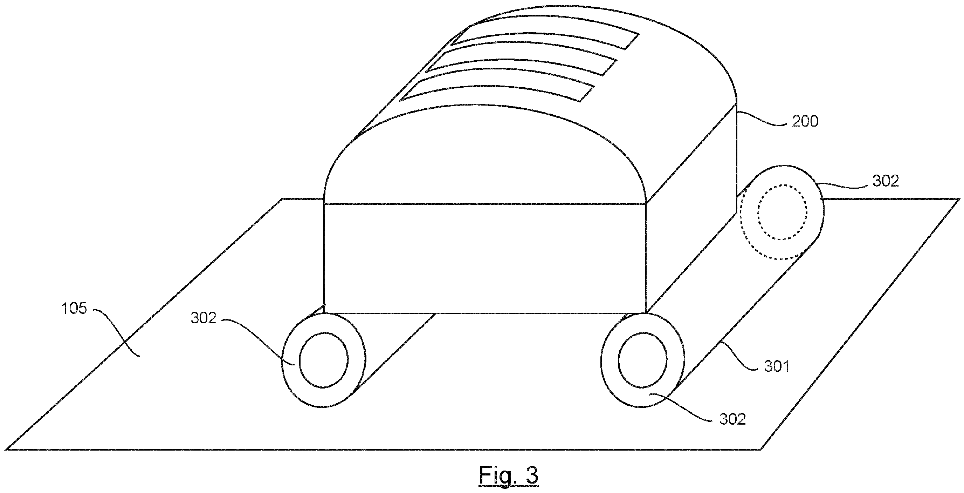

La **figure 3** présente un moyen de guidage et d'amortissement d'une tête de lecture magnétique selon un deuxième mode de réalisation de l'invention, dans lequel le un moyen de guidage et d'amortissement est constitué de deux pièces de soutien 301.

Les deux pièces de soutien 301, qui sont creuses, ont une forme de cylindre de révolution, dont les bases 302 sont montées perpendiculairement à un plan d'appui 105. De plus les pièces de soutien sont situées parallèlement entre elles. Contrairement au mode de réalisation présenté en figures 1 et 2, la base de la tête de lecture magnétique est fixée (par exemple avec des points de colle) à des portions des flancs des pièces de soutien. Dans un autre mode de réalisation, on peut avoir plusieurs pièces de soutien qui supportent la base de la tête de lecture.

Dans le deuxième mode de réalisation de l'invention, les pièces de soutien sont réalisées en élastomère.

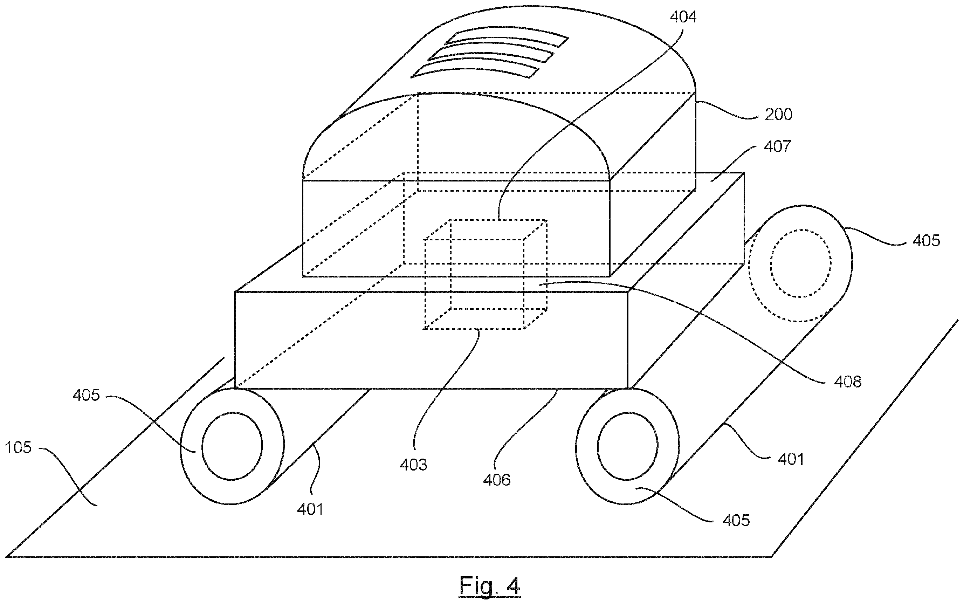

La **figure 4** présente un moyen de guidage et d'amortissement d'une tête de lecture magnétique selon un troisième mode de réalisation de l'invention sur lequel est fixé une tête de lecture magnétique.

Dans ce mode de réalisation, le moyen de guidage et d'amortissement est constitué d'une seule et même pièce en élastomère, obtenue par un procédé de fabrication en utilisant par exemple un moule (en injectant le matériau dans le moule).

Selon le troisième mode de réalisation de l'invention, le moyen de guidage et d'amortissement comprend deux pièces de soutien 401 pleines, en forme de cylindre de révolution, dont les bases 405 sont montées perpendiculairement à un plan d'appui 105, et les pièces de soutien sont positionnées parallèlement entre elles. Le moyen de guidage et d'amortissement comprend en outre une pièce de réception 402 en forme de parallélépipède rectangulaire ou de cube dont une des faces 406 fait en partie corps avec des portions des flans des pièces de soutien en forme de cylindre de révolution. Ainsi, la pièce de réception 402 se trouve quasiment parallèle au plan d'appui 105.

Cette pièce de réception 402 en forme de parallélépipède rectangulaire ou de cube comprend une première fente 403 sur la face susmentionnée 406. Il comprend aussi une ouverture 404 sur la face 407 opposée à la face 406 faisant en partie corps avec des portions des flans des pièces de soutien en forme de cylindre de révolution. Les fentes 403 et 404 définissent une petite cavité 408 permettant le passage d'un câble en nappe pour alimenter la tête de lecture 200 (et pour réceptionner les information lues par la tête de lecture).

Dans ce mode de réalisation de l'invention, la base de la tête de lecture magnétique est fixée (via des points de colle) sur la face 407 qui est opposée à la face 406 faisant en partie corps avec des portions des flans des pièces de soutien en forme de cylindre de révolution.

Dans un autre mode de réalisation de l'invention, la pièce de réception 402 en forme de parallélépipède rectangulaire ou de cube peut être remplacée par tout type d'élément possédant au moins une portion plane pour accueillir la base de la tête de lecture magnétique.

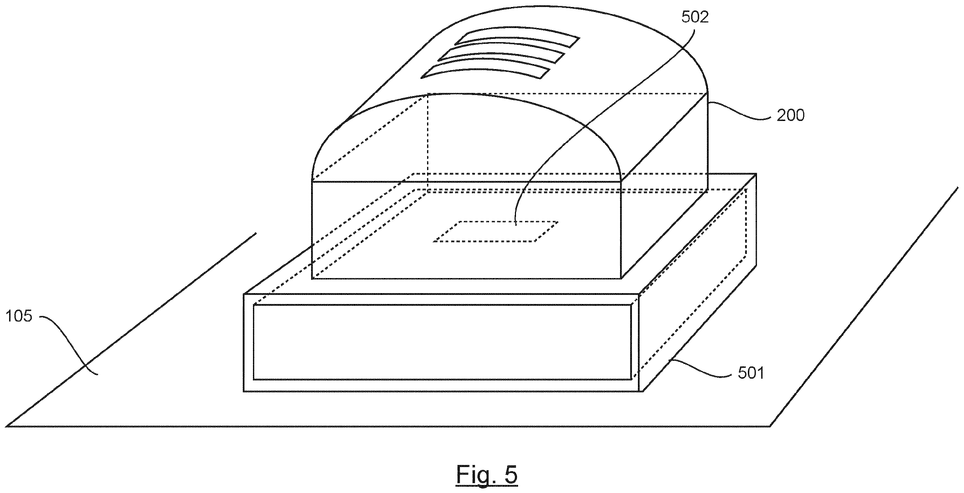

La **figure 5** présente un moyen de guidage et d'amortissement d'une tête de lecture magnétique selon un quatrième mode de réalisation de l'invention comprenant une pièce de soutien en forme de parallélépipède rectangle creux.

Dans ce mode de réalisation, le moyen de guidage et d'amortissement est constitué d'une seule et même pièce en élastomère, obtenue par un procédé de fabrication en utilisant par exemple un moule (en injectant le matériau dans le moule).

Selon le quatrième mode de réalisation de l'invention, le moyen de guidage et d'amortissement comprend une seule pièce de soutien 501 creuse, en forme de parallélépipède rectangle en contact via une de ses faces avec un plan d'appui 105. Le fait de choisir une telle pièce de soutien creuse permet d'augmenter l'élasticité du moyen de guidage et d'amortissement. Dans un autre mode de réalisation, on peut choisir une pièce de soutien ayant une forme de cylindre et dans ce cas, une portion du flanc de la pièce de soutien est en contact direct avec le plan d'appui 105.

Selon le quatrième mode de réalisation de l'invention, la face opposée à la face en contact avec le plan d'appui 105 comprend une fente 502. Sur cette même face, la base de la tête de lecture magnétique 200 est fixée via des points de colle. La présence de la fente permet de faciliter la connexion entre la tête de lecture magnétique et un dispositif d'alimentation et de traitement d'informations via un câble en nappe.

L'Homme du Métier peut facilement adapter les modes de réalisations de l'invention présentés dans les figures 1 à 5 en vu d'obtenir des variantes de la présente invention. Notamment, en modifiant la structure des têtes de lectures (de sorte qu'une tête de lecture magnétique possède une fente pour faire passer un câble nappe destiné à alimenter la tête de lecture non plus au niveau de la base de ladite tête, mais sur autre côté de la structure de la tête magnétique), un autre mode de réalisation de l'invention peut consister à ne pas inclure de fentes dans les modes de réalisation décrits dans les figures 1, 2, 4 et 5.

L'Homme du Métier peut aussi réaliser des variantes de la présente invention en fonction du choix du matériau utilisé (tout type de matériaux viscoélastiques solide), de la forme et du nombre du ou des pièces de soutien utilisées pour réaliser un moyen de guidage et d'amortissement de tête de lecture magnétique permettant de garantir la bonne lecture d'une carte magnétique.

Enfin, l'Homme du Métier peut réaliser un moyen de guidage et d'amortissement constitué d'un support pour la base de la tête de lecture en forme de croix (obtenu par l'agencement de deux pièces de soutien en forme cylindrique).

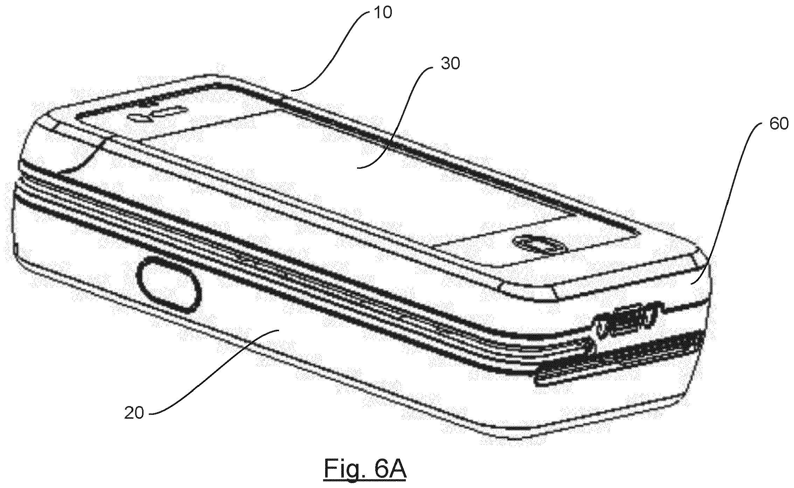

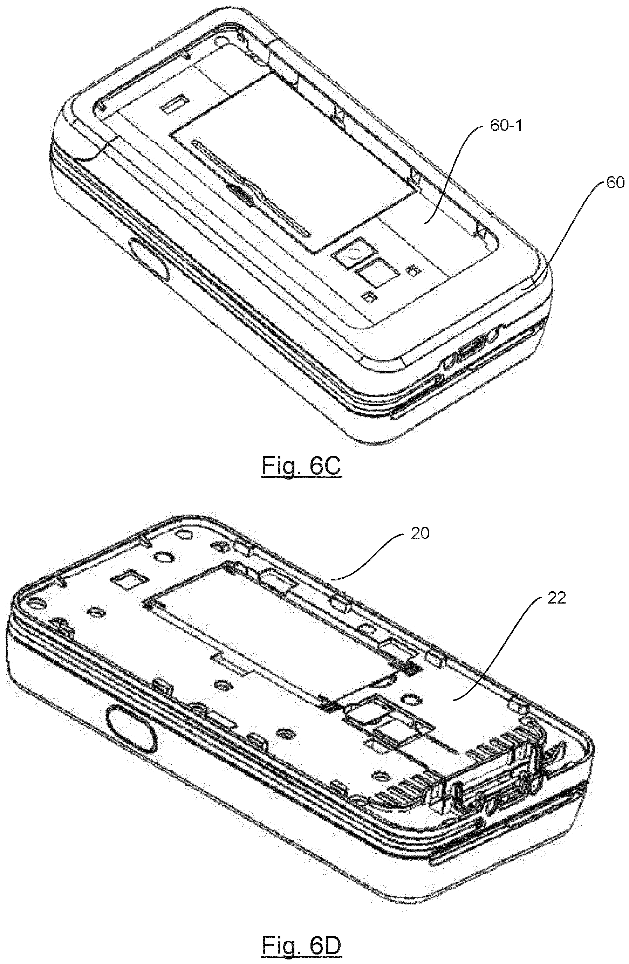

Les figures 6A à 6D présentent un exemple de terminal de paiement comprenant un lecteur de cartes magnétiques comportant un dispositif de maintien d'une tête de lecture magnétique selon un mode de réalisation quelconque de l'invention.

Le terminal de paiement (10) comprend deux sous-ensembles généraux, pouvant être assemblés, que sont le dispositif de paiement (20) et le dispositif de communication (30).

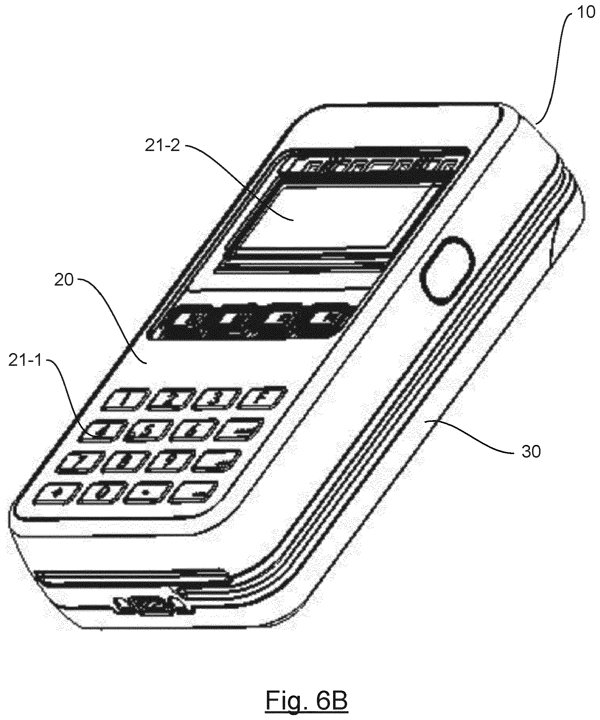

Comme illustré, le dispositif de paiement (20) comprend une face avant, visible sur la figure 6B, présentant un clavier pour la saisie d'information (21-1) et un écran de visualisation (21-2) des informations saisies. Le dispositif de paiement comprend, en face arrière, visible sur la figure 6D, une surface de fixation (22) permettant la fixation d'une interface modulaire (60) pour l'appairage du dispositif de communication (30).

Plus particulièrement, cette interface modulaire définit un logement (60-1) d'insertion et d'appairage du dispositif de communication (30).

Le dispositif de paiement, quant à lui, est apte à remplir des fonctions de paiement. Pour ce faire, le dispositif de paiement (20) comprend, outre le clavier pour la saisie d'information (21-1) et l'écran de visualisation (21-2) des informations saisies, une demi coque supérieure (21-3) comprenant les orifices nécessaires pour le passage des touches du clavier (21-1) et une ouverture pour la visualisation de l'écran (21-2). L'écran peut également être sensitif, et assurer la fonction de clavier.

Le dispositif de paiement (20) comprend également une demi coque inférieure (21-4) qui se solidarise à la demi coque supérieure (21-3) pour former le boîtier du dispositif de paiement (20). La demi coque inférieure (21-4) définit la surface (22) permettant la fixation de l'interface modulaire (60). La demi coque inférieure (21-4) comprend un logement (21-41) pour l'insertion d'une batterie permettant l'alimentation électrique du dispositif de paiement (20).

La demi coque inférieure (21-4) est également conformée de sorte qu'elle présente une fente (21-42) permettant le passage d'une carte de paiement comprenant une piste magnétique. Une fois le dispositif de paiement assemblé, cette fente (21-42) s'étend sur l'un des flancs du dispositif de paiement (20) et permet la lecture de la carte de paiement à bande magnétique, par un mouvement de translation de celle-ci sur la longueur du dispositif de paiement (20).

La demi coque inférieure (21-4) du dispositif de paiement (20) comprend une ouverture (21-43) traversée par une tête de lecture magnétique (24). Cette ouverture (21-43) est conformée de sorte qu'elle puisse permettre une certaine mobilité de la tête de lecture magnétique (24, 200). Ainsi, un jeu réduit est possible, assurant cette mobilité est aménagé sur le pourtour de l'ouverture. La tête de lecture magnétique (24, 200) peut ainsi évoluer dans une certaine mesure afin d'assurer une lecture optimale des informations contenues sur la piste magnétique d'une carte de paiement. Cette tête de lecture magnétique (24, 200) est posée sur un dispositif de maintien comprenant un moyen de guidage et d'amortissement de la tête de lecture, selon un mode quelconque de réalisation de l'invention (différents modes de réalisation sont présentés dans les figures 1 à 5), et est reliée à une carte mère (27) du dispositif de paiement par l'intermédiaire d'une nappe.

La carte mère (27) est un circuit électronique qui comprend sur une première face, dans ce mode de réalisation, un ensemble de microcircuits, notamment un ou plusieurs microprocesseurs et/ou des mémoires, ainsi que des dispositifs permettant la connexion des éléments du clavier (21-1) et de l'écran de visualisation (21-2). Sur sa deuxième face, la carte mère comprend d'autres microcircuits, ainsi qu'un lecteur de carte à mémoire (appelé lecteur CAM) (28). Ce lecteur (28) est configuré pour permettre l'insertion et la lecture d'une carte de paiement comprenant une puce.

Un volume inutilisé (25) est présent sous la surface de fixation (22) de la demi coque inférieure (21-4), latéralement à la tête de lecture magnétique (24).

Afin d'augmenter la sécurité du dispositifs de paiement, on adjoint une carte, également appelée carte « fille », qui permet d'une part de sécuriser l'accès aux composants internes du dispositif de paiement et d'autre part de remplir d'autres fonctions annexes du dispositif de paiement. Cette carte fille est située sous la surface de fixation (22) permettant la fixation d'une interface modulaire (60) pour l'appairage du dispositif de communication (30). En d'autres termes, cette carte fille qui empêche l'accès à la carte mère et empêche l'insertion d'une tête de lecture magnétique.

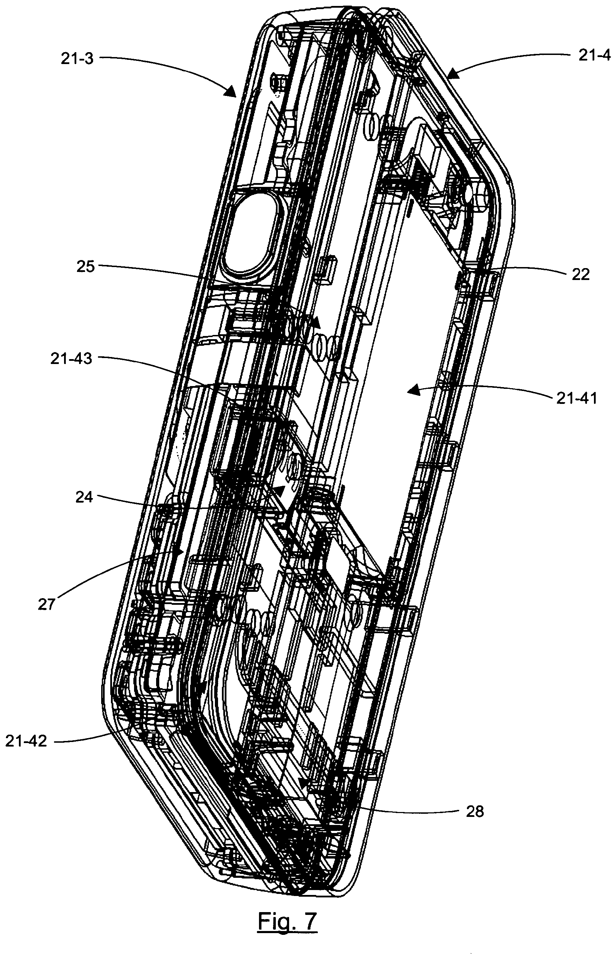

La figure 7 présente la structure interne du dispositif de paiement présenté dans les figures 6A à 6D.

## Revendications

1. Dispositif de maintien d'une tête de lecture magnétique (200), le dispositif comprenant un moyen de guidage et d'amortissement de ladite tête de lecture, monté entre une base de la tête de lecture et un plan d'appui parallèle à ladite base, comprenant au moins une pièce réalisée en un matériau possédant un module d'élasticité supérieur à 200 N/mm², et ledit moyen de guidage et d'amortissement comprenant au moins une pièce de soutien (101; 301 ; 401 ; 501) reposant sur le plan d'appui (105), réalisée en un matériau élastomère et possédant une forme de cylindre dont les bases sont positionnées perpendiculairement au plan d'appui.

2. Dispositif selon la revendication 1, **caractérisé en ce que** ledit matériau appartient au groupe comprenant : des silicones ; des thermoplastiques élastomères.

3. Dispositif selon l'une quelconque des revendications 1 et 2, **caractérisé en ce que** ledit moyen de guidage et d'amortissement est une structure entièrement réalisée en un matériau possédant un module d'élasticité supérieur à 200 N/mm².

4. Dispositif selon l'une quelconque des revendications 1 à 3, **caractérisé en ce que** ladite au moins une pièce de soutien en forme de cylindre est creuse (101; 301; 501).

5. Dispositif selon l'une quelconque des revendications 1 à 4, **caractérisé en ce que** le dispositif comprend deux dites pièces de soutien en forme de cylindre qui sont similaires et montées parallèles entre elles.

6. Dispositif selon l'une quelconque des revendications 1 à 5, **caractérisé en ce que** ledit moyen de guidage et d'amortissement comprend une pièce de réception (102; 402) de la base de la tête de lecture, reposant sur ladite au moins une pièce de soutien.

7. Dispositif selon la revendication 6, **caractérisé en ce que** ladite pièce de réception possède un logement dans lequel s'encastre la tête de lecture.

8. Dispositif selon l'une quelconque des revendications 6 et 7, **caractérisé en ce que** ladite pièce de réception possède une ouverture traversante (104; 408) permettant le passage d'un élément de connexion relié à la tête de lecture.

9. Lecteur de cartes magnétiques comportant un dispositif de maintien d'une tête de lecture magnétique selon l'une quelconque des revendications 1 à 8.

10. Lecteur selon la revendication 9, **caractérisé en ce qu'**il comprend un boîtier comprenant, sur une première face, un écran et/ou un clavier, et sur une seconde face, un logement apte à recevoir un terminal de communication, et **en ce que** ledit boîtier présente une fente longitudinale d'insertion d'une carte magnétique, au voisinage de laquelle est placée ladite tête de lecture.

## Patentansprüche

1. Vorrichtung zum Halten eines Magnetlesekopfs (200), wobei die Vorrichtung ein Mittel zum Führen und Dämpfen des Lesekopfs aufweist, das zwischen einer Basis des Lesekopfs und einer Auflageebene, die parallel zu der Basis ist, angebracht ist, umfassend mindestens ein Teil, das aus einem Material hergestellt ist, das ein Elastizitätsmodul von mehr als 200 N/mm² aufweist, und wobei das Mittel zum Führen und Dämpfen mindestens ein Stützteil (101; 301; 401; 501) aufweist, das auf der Auflageebene (105) ruht, das aus einem elastomeren Material hergestellt ist und eine zylindrische Form aufweist, deren Basen senkrecht zu der Auflageebene positioniert sind.

2. Vorrichtung nach Anspruch 1, **dadurch gekennzeichnet, dass** das Material zu der Gruppe gehört, umfassend: Silikone, thermoplastische Elastomere.

3. Vorrichtung nach einem der Ansprüche 1 und 2, **dadurch gekennzeichnet, dass** das Mittel zum Führen und Dämpfen eine Struktur ist, die vollständig aus einem Material hergestellt ist, das ein Elastizitätsmodul von mehr als 200 N/mm² aufweist.

4. Vorrichtung nach einem der Ansprüche 1 bis 3, **dadurch gekennzeichnet, dass** das mindestens eine Stützteil in zylindrischer Form hohl ist (101; 301; 501).

5. Vorrichtung nach einem der Ansprüche 1 bis 4, **dadurch gekennzeichnet, dass** die Vorrichtung zwei Stützteile in zylindrischer Form aufweist, die gleich sind und parallel zueinander befestigt sind.

6. Vorrichtung nach einem der Ansprüche 1 bis 5, **dadurch gekennzeichnet, dass** das Mittel zum Führen und Dämpfen ein Aufnahmeteil (102; 402) der Basis des Lesekopfes aufweist, das auf mindestens einem Stützteil ruht.

7. Vorrichtung nach Anspruch 6, **dadurch gekennzeichnet, dass** das Aufnahmeteil eine Aufnahme aufweist, in die sich der Lesekopf einfügt.

8. Vorrichtung nach einem der Ansprüche 6 und 7, **dadurch gekennzeichnet, dass** das Aufnahmeteil eine durchgehende Öffnung (104; 408) aufweist, die den Durchgang eines Anschlusselements ermöglicht, das mit dem Lesekopf verbunden ist.

9. Magnetkartenleser, umfassend eine Vorrichtung zum Halten eines Magnetlesekopfs nach einem der Ansprüche 1 bis 8.

10. Leser nach Anspruch 9, **dadurch gekennzeichnet, dass** er ein Gehäuse aufweist, umfassend auf einer ersten Seite einen Bildschirm und/oder eine Tastatur und auf einer zweiten Seite eine Aufnahme, die geeignet ist, ein Kommunikationsendgerät aufzunehmen, und dadurch, dass das Gehäuse einen Längsschlitz zum Einfügen von einer Magnetkarte aufweist, in dessen Nähe der Lesekopf angeordnet ist.

## Claims

1. Device for holding a magnetic reading head (200) comprising a means for guiding and cushioning said reading head, mounted between a base of the reading head and a supporting plane parallel to said base, comprising at least one part made out of a material possessing a modulus of elasticity greater than 200 N/mm², and said means for guiding and cushioning comprising at least one supporting part (101; 301 ; 401 ; 501) resting on the supporting plane made out of an elastomer material and having a cylindrical shape, the bases of which are positioned perpendicularly to the supporting plane..

2. Device according to claim 1, **characterized in that** said material belongs to the group comprising; silicones; thermoplastic elastomers.

3. Device according to any one of the claims 1 and 2 **characterized in that** said means for guiding and cushioning is a structure entirely made out of a material having a modulus of elasticity of over 200 N/mm².

4. Device according to any one of the claims 1 to 3, **characterized in that** said at least one cylinder-shaped supporting part is hollow (101; 301; 501).

5. Device according to any one of the claims 1 to 4, **characterized in that** the device comprises two said cylinder-shaped supporting parts which are similar and mounted so as to be parallel to each other.

6. Device according to any one of the claims 1 to 5, **characterized in that** said means for guiding and cushioning comprise a part for receiving (102; 402) the base of the reading head, resting on said at least one supporting part.

7. Device according to claim 6, **characterized in that** said part for receiving possesses a housing in which the reading head is embedded.

8. Device according to any one of the claims 6 et 7, **characterized in that** said part for receiving has a through aperture (104, 408) enabling the passage of a connection element connected to the reading head.

9. Magnetic card reader comprising a device for holding a magnetic reading head according to any one of the claims 1 to 8.

10. Reader according to claim 9, **characterized in that** it comprises a case comprising, on a first face, a screen and/or a keypad and, on a second face, a housing capable of receiving a communication terminal, and **in that**, said case has a longitudinal slot for inserting a magnetic card, in the vicinity of which said reading head is placed.
